(19) Europäisches Patentamt / European Patent Office / Office européen des brevets

(11) **EP 2 713 139 B1**

(12) **EUROPEAN PATENT SPECIFICATION**

(45) Date of publication and mention
of the grant of the patent:
**18.09.2019   Bulletin 2019/38**

(51) Int Cl.:
**G01B 11/24** *(2006.01)*      **G05B 19/401** *(2006.01)*

(21) Application number: **13186678.2**

(22) Date of filing: **30.09.2013**

(54) **External form measuring apparatus**

Messvorrichtung zum Messen einer externen Form

Appareil de mesure de forme externe

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2012   JP 2012219382**

(43) Date of publication of application:
**02.04.2014   Bulletin 2014/14**

(73) Proprietor: **Komatsu NTC Ltd.
Nanto-City
Toyama 939-1595 (JP)**

(72) Inventors:
• **Yoshimoto, Akihiro**
  **Ishikawa 923-0392 (JP)**
• **Nakajima, Akira**
  **Ishikawa 923-0392 (JP)**

(74) Representative: **Flügel Preissner Schober Seidel
Patentanwälte PartG mbB
Nymphenburger Strasse 20a
80335 München (DE)**

(56) References cited:
**EP-A1- 2 308 622     WO-A1-93/23820**

**Description**

BACKGROUND

Technical Field

The present invention relates to an external form measuring apparatus that measures the external form of an object to be measured.

Background Art

In the conventional art, a method for forming a center hole in both end faces of a crankshaft blank has been proposed in which the external form of a rotating crankshaft blank is measured using a laser displacement meter, and the positions of the center holes are determined based on data of the actual external form obtained through calculations from the measured value data as disclosed in JP 2010 029 994 A and EP 2 308 622 A1.

Furthermore, WO 93/23820 A1 discloses methods and apparatus configured to avoid the use of coolants wherever possible. Thereby the use of dry cutting tools based on ceramic or similar brittle materials shall be improved by minimizing wear.

SUMMARY

Technical Problem

However when measuring the external form of a rotating crankshaft blank using a laser displacement meter, due to the optical axis of the laser oscillator becoming displaced from the rotation axis of the crankshaft blank, it is easy for errors to arise in the measured value data of the laser displacement meter.

In light of the above, it is a purpose of the present invention to provide an external form measuring apparatus that can accurately measure the external form of an object to be measured.

SOLUTION TO PROBLEM

The present invention provides an apparatus as defined in claim 1, which addresses the above-mentioned issues. The dependent claims further develop the idea of the present invention.

An external form measuring apparatus for measuring an external form of an object, according to the present disclosure, comprises: a first chuck, a second chuck, a first calibration plate, a second calibration plate, a laser displacement meter, an optical axis calibration value calculation unit and an external form measuring unit. The first chuck is configured to rotatably grip a first end portion of the object to be measured. The second chuck is configured to rotatably grip a second end portion of the object to be measured. The first calibration plate is fixed to the first chuck. The first calibration plate has a first insertion hole to which the first end portion is inserted. The first calibration plate is formed in round plate shape. The second calibration plate is fixed to the second chuck. The second calibration plate has a second insertion hole to which the second end portion is inserted. The second calibration plate is formed in round plate shape. The laser displacement meter is arranged to a side of the object to be measured. The laser displacement meter is configured to move along a rotation axis of the first chuck. The laser displacement meter is configured to measure positions of the object to be measured. The first calibration plate and the second calibration plate rotate about the rotation axis. The optical axis calibration value calculation unit is configured to calculate first optical axis calibration value and second optical axis calibration value. The optical axis of the laser displacement meter is defined by an irradiated laser beam. The first and second optical axis calibration values are showing an interval between the rotation axis and an optical axis of the laser displacement meter, wherein the interval extends in a vertical direction to the optical axis, based on measured value data of each of the first and second calibration plates and design value data of each of the first and second calibration plates which are measured by the laser displacement meter. The external form measuring unit is configured to measure an external form of the object to be measured by calibrating the measured value data of the object to be measured by the laser displacement meter based on the first optical axis calibration value and the second optical axis calibration value. A center of the first insertion hole is away from a center of the first calibration plate. A center of the second insertion hole is away from a center of the second calibration plate.

The external form measuring apparatus according to a first aspect of the present disclosure, can calibrate values data measured by the laser displacement meter in conformance with the interval (displacement) in the vertical direction, between the optical axis of the laser displacement meter and the axes of rotation of the first and the second chucks. For this reason, even when there is displacement between the optical axis and the rotation axis, the external form of an object to be measured can be measured accurately.

The external form measuring apparatus according to a second aspect of the present disclosure is the apparatus according to the first aspect, in which an interval between the center of the first insertion hole and the center of the first calibration plate is not less than ¼ of a radius of the first calibration plate.

The external form measuring apparatus according to a third aspect of the present disclosure is the apparatus according to either of the first aspect or the second aspect, in which an interval between the center of the second insertion hole and the center of the second calibration plate is not less than ¼ of a radius of the second calibration plate.

The external form measuring apparatus according to the second aspect or the third aspect of the present disclosure, being able to show up the error value between the measured value data and design value data, can control the occurrence of the error value being buried in measurement errors of the laser displacement meter itself.

The external form measuring apparatus according to a fourth aspect of the present disclosure is the apparatus according to any one of the first to third aspects, provided with a rod member and a intermediate calibration plate. Both ends of the rod member are inserted in the first insertion hole and the second insertion hole. The intermediate calibration plate is fixed to the rod member. The intermediate calibration plate is eccentric from the rotation axis. The intermediate calibration plate is formed in round plate shape. The optical axis calibration value calculation unit is configured to calculate third optical axis calibration value showing an interval between the optical axis and the rotation axis in the vertical direction to the optical axis. The external form measuring unit is configured to measure the external form of the object to be measured by calibrating the measured value data of the object to be measured based on the first optical axis calibration value, the second optical axis calibration value and the third optical axis calibration value.

The external form measuring apparatus according to a fourth aspect of the present disclosure, in comparison to the case of using an optical axis calibration value calculated by proportionately dividing a first optical axis calibration value and a second optical axis calibration value, is able to perform calibration in conformance to the actually existing displacement.

ADVANTAGEOUS EFFECTS

The above-described invention provides an external form measuring device that is able to accurately measure the external form of an object to be measured.

BRIEF DESCRIPTION OF DRAWINGS

FIG. 1 is a block diagram showing a crankshaft processing system in outline;
FIG. 2 is a perspective view of a crankshaft bank;
FIG. 3 is a plan view of a center hole drilling machine;
FIG. 4 is a plan view of the first calibration plate;
FIG. 5 is a plan view of the second calibration plate;
FIG. 6 is a block diagram explaining the operation of the center hole drilling machine;
FIG. 7 is a block diagram explaining the operation of the external form measuring apparatus;
FIG. 8 shows the configuration in the CPU for measuring external form;
FIG. 9 is a schematic diagram explaining the movement sequence of the laser displacement meter;
FIG. 10 is a schematic diagram explaining the state of displacement of the optical axis from the rotation axis;
FIG. 11 is a graph showing the transition of measured value data obtained by the laser displacement meter shown in FIG. 10;
FIG. 12 is a graph showing the transition of error values of measured value data and design value data;
FIG. 13 is a graph showing the transition of measured value data and design value data;
FIG. 14 explains the process of measuring external form of a counterweight;
FIG. 15 provides simulation results showing the relationship between interval a1 and radius Ra, and error values; and
FIG. 16 is a perspective view of a calibration test bar.

DETAILED DESCRIPTION OF EMBODIMENTS

A preferred embodiment in which an external form measuring apparatus according to the present invention is applied to a crankshaft processing system will now be described, it being understood that the external form measuring apparatus related to the present invention is not restricted to the crankshaft processing system described following, and can be utilized for the purpose of measuring the external form of a variety of objects to be measured such as a camshaft or the like.

An outline of the crankshaft processing system 100

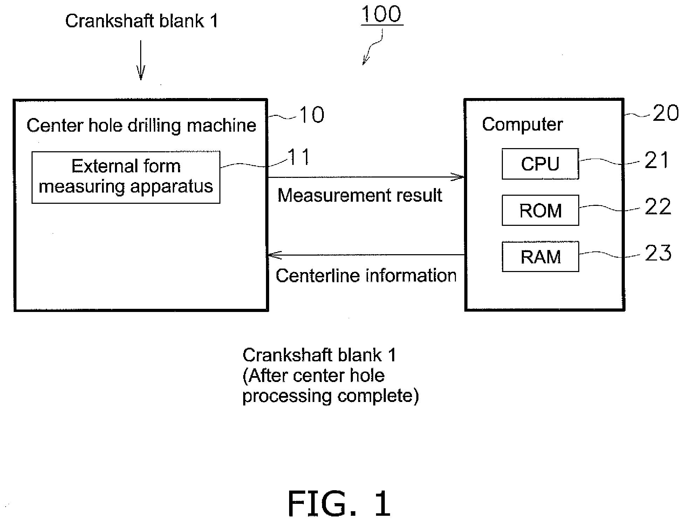

FIG. 1 is a block diagram showing a crankshaft processing system 100 in outline. The crankshaft processing system 100 comprises a center hole drilling machine 10 for drilling a center hole in both end faces of a crankshaft blank 1, and a computer 20 for determining the position of the center hole based on the external form of the crankshaft blank 1.

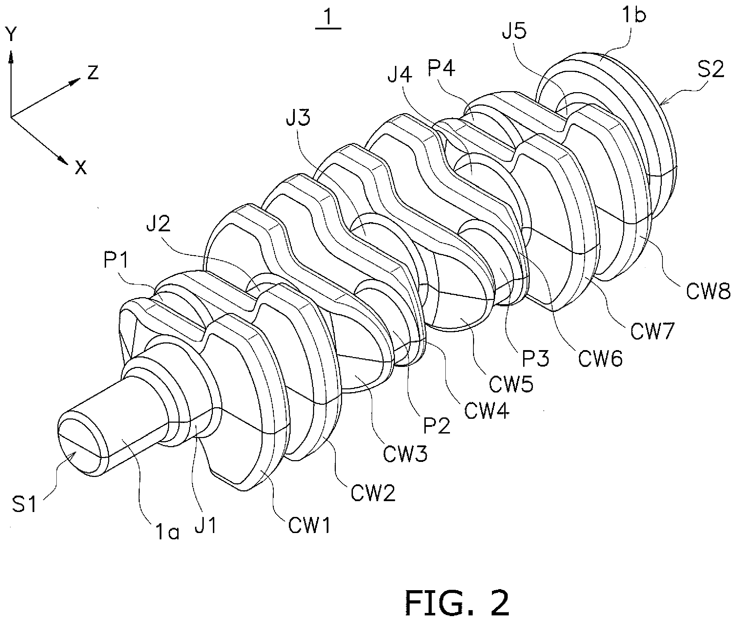

The center hole drilling machine 10 is provided with an external form measuring apparatus 11 for measuring the external form of a crankshaft blank 1 (an example of an object to be measured). The external form measuring apparatus 11 measures the external form of the crankshaft blank 1. Basically, as described subsequently, the external form measuring apparatus 11 measures the external form of eight counterweights CW1-CW8 (referring to FIG. 2) among the crankshaft blank 1. The center hole drilling machine 10 forms the center hole in the position determined based on the external form of the crankshaft blank 1 measured by the external form measuring apparatus 11.

The computer 20 has a central processing unit (CPU) 21, Read Only Memory (ROM) 22, and Random Access Memory (RAM) 23.

The ROM 22 stores various kinds of programs made to run in the CPU 21 and various kinds of information. In this embodiment, the ROM 22 stores a program for measuring the external form of the crankshaft blank 1, and a program for determining the position of the center hole of the crankshaft blank 1.

Further, in this embodiment, the ROM 22 stores dimensions of the subsequently described, first and second calibration plates 17a and 17b.

The RAM 23 is used as a region for storage of programs and data, or as an operating region for housing data used in processing by the CPU 21.

Configuration of the crankshaft blank 1

FIG. 2 is a perspective view of a crankshaft bank. The crankshaft blank 1 is a crankshaft blank used for an in-line four-cylinder engine.

The crankshaft blank 1, as shown in FIG. 2, has main journals J (J1-J5), pin journals P (P1-P4), and counterweights CW (CW1-CW8). In the crankshaft blank 1, are arranged in succession in the direction of the z-axis, the main journal J1, the counterweight CW1, the pin journal P1, the counterweight CW2, the main journal J2, the counterweight CW3, the pin journal P2, the counterweight CW4, the main journal J3, the counterweight CW5, the pin journal P3, the counterweight CW6, the main journal J4, the counterweight CW7, the pin journal P4, the counterweight CW8, and the main journal J5.

Further, the crankshaft blank 1, as shown in FIG. 2, has a front shaft 1a (an example of the first end portion), and a rear flange 1b (an example of the second end portion). The front shaft 1a has the first end surface S1 in which a center hole is formed in a subsequent process. The rear flange 1b has a second end face S2 in which a center hole is formed in a subsequent process.

Configuration of the center hole drilling machine 10

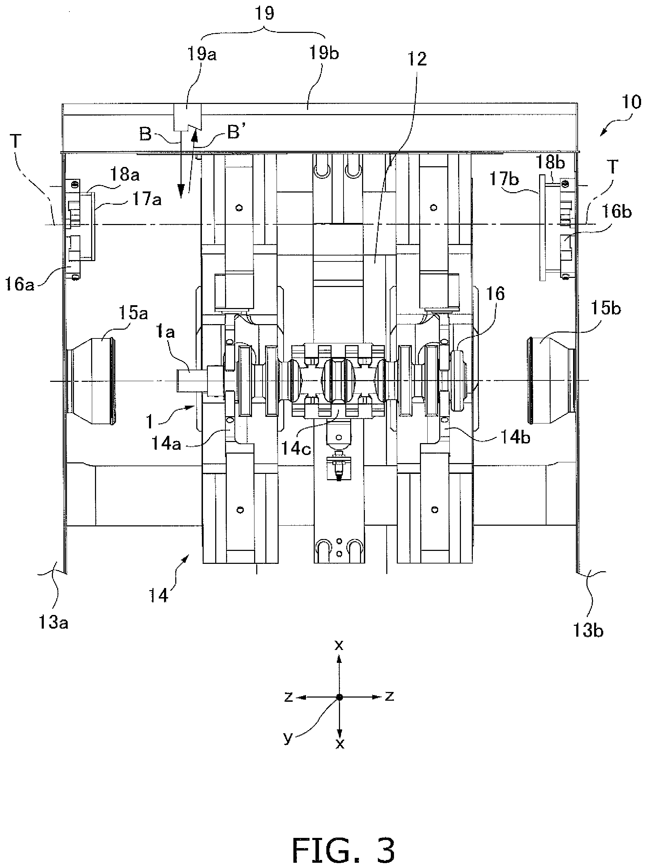

FIG. 3 is a plan view of the center hole drilling machine 10.

The center hole drilling machine 10, as shown in FIG. 3, has a base portion 12, first and second side portions 13a and 13b, a main clamper 14, and first and second working blade tools 15a and 15b.

The first and second side portions 13a and 13b are arranged facing each other, at both ends of the base portion 12. The first and second side portions 13a and 13b are movable, through being driven by a drive part not shown in the drawing, in three axial directions (the direction of the x-axis, the direction of the y-axis, and the direction of the z-axis).

The main clamper 14 is fixed to the base portion 12. The main clamper 14 is a member for securing by gripping, the crankshaft blank 1, and has first and second gripping portions 14a and 14b for gripping the crankshaft blank 1, and a longitudinal positioning clamper 14c for positioning the crankshaft blank 1 in the longitudinal direction.

The first and second working blade tools 15a and 15b are fixed to the first and second side portions 13a and 13b, being movable in relation to the crankshaft blank 1, in conformance with the movements of the first and second side portions 13a and 13b. The first and second working blade tools 15a and 15b each have a cutting edge for milling the first and second end surfaces S1 and S2 of the crankshaft blank 1 and a drill for forming center holes in the first and second end surfaces S1 and S2.

Further, the center hole drilling machine 10 has first and second centripetal chucks 16a and 16b, first and second calibration plates 17a and 17b, first and second support portions 18a and 18b, and a displacement meter assembly 19. The first and second centripetal chucks 16a and 16b, the first and second calibration plates 17a and 17b, the first and second support portions 18a and 18b, the displacement meter assembly 19, and the above-described computer 20, comprise the "external form measuring apparatus 11" related to this embodiment.

The first and second centripetal chucks 16a and 16b are fixed to the first and second side portions 13a and 13b, and are able to move in relation to the crankshaft blank 1 in conformance with the movements of the first and second end portions 13a and 13b. Each of the first and second centripetal chucks 16a and 16b have three chuck claws arranged at equal angular intervals. The first centripetal chuck 16a is able to rotate about the rotation axis T, in the condition of gripping the front shaft 1a of the crankshaft blank 1. The second centripetal chuck 16b is able to rotate about the rotation axis T, in the condition of gripping the rear flange 1b of the crankshaft blank 1.

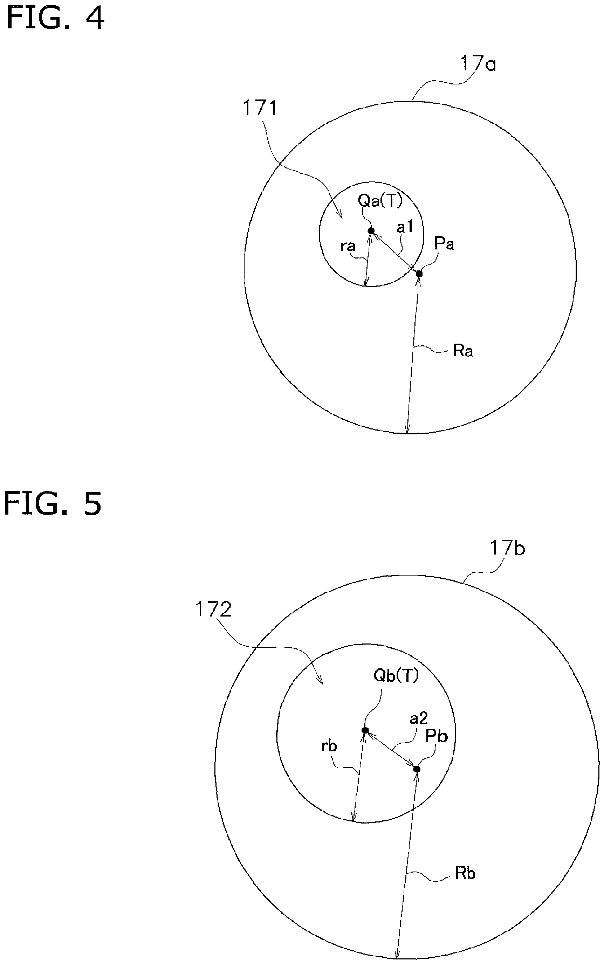

The first and second calibration plates 17a and 17b are fixed to the first and second centripetal chucks 16a and 16b via the first and second supporting portions 18a and 18b. Accordingly, the first and second calibration plates 17a and 17b are able to rotate about the rotation axis T together with the first and second centripetal chucks 16a and 16b. Here, FIG. 4 is a plan view of the first calibration plate 17a, and FIG. 5 is a plan view of the second calibration plate 17b.

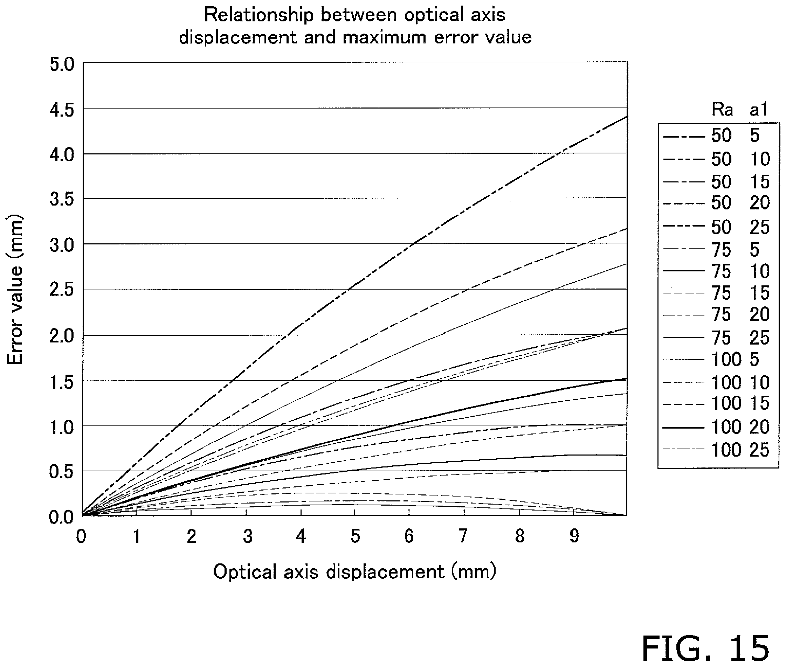

The first calibration plate 17a, as shown in FIG. 4, is a planar member formed in a round plate shape having radius Ra, centered around center Pa. A first insertion hole 171 for insertion of the front shaft 1a of the crankshaft blank 1 is formed in the first calibration plate 17a. The first insertion hole 171 is formed in the round plate shape having radius Ra, centered around center Qa. It is suitable that the radius Ra be greater than the outer diameter of the front shaft 1a. The center Qa of the first insertion hole 171 is removed from the center Pa of the first calibration plate 17a by the interval a1 only, and matches the rotation axis T of the first and second centripetal chucks 16a and 16b. As can be understood from the results of the simulation (refer FIG. 15) described subsequently, it is suitable that the interval a1 between the center Qa and the center Pa be not less than ¼ of the radius Ra of the first calibration plate 17a.

The second calibration plate 17b, as shown in FIG. 5, is a planar member formed in a round plate shape having radius Rb, centered around center Pb. A second insertion hole 172 for insertion of the rear flange 1b of the crankshaft blank 1, is formed in the second calibration plate 17b. The second insertion hole 172 is formed in the round plate shape having radius Rb, centered around center Qb. It is suitable that the radius Rb be greater than the outer diameter of the rear flange 1b. The center Qb of the second insertion hole 172 is separated from the center Pb of the second calibration plate 17b by the interval 2a only, and matches the rotation axis T. Further, as can be understood from the results of the simulation, it is suitable that the interval a2 between the center Qb and the center Pb be not less than one quarter of the radius Rb of the second calibration plate 17b.

The displacement meter assembly 19 comprises a laser displacement meter 19a and a rail 19b. The laser displacement meter 19a, by detecting the reflected light B' of an irradiated laser beam B, measures the distance to an object irradiated by the laser beam B based on the principles of the triangulation method. The laser displacement meter 19a is arranged to the side of the crankshaft blank 1, and moves parallel to the rotation axis T, being driven by a drive unit, not shown in the drawings. The laser displacement meter 19a, as described subsequently, successively measures the distance between the first and second calibration plates 17a and 17b and the eight counterweights CW1-CW8. The laser displacement meter 19a sends the measured value data to the computer 20. The rail 19b is arranged following the rotation axis T of the first and second centripetal chucks 16a and 16b. The rail 19b movably supports the laser displacement meter 19a along the direction of the Z axis.

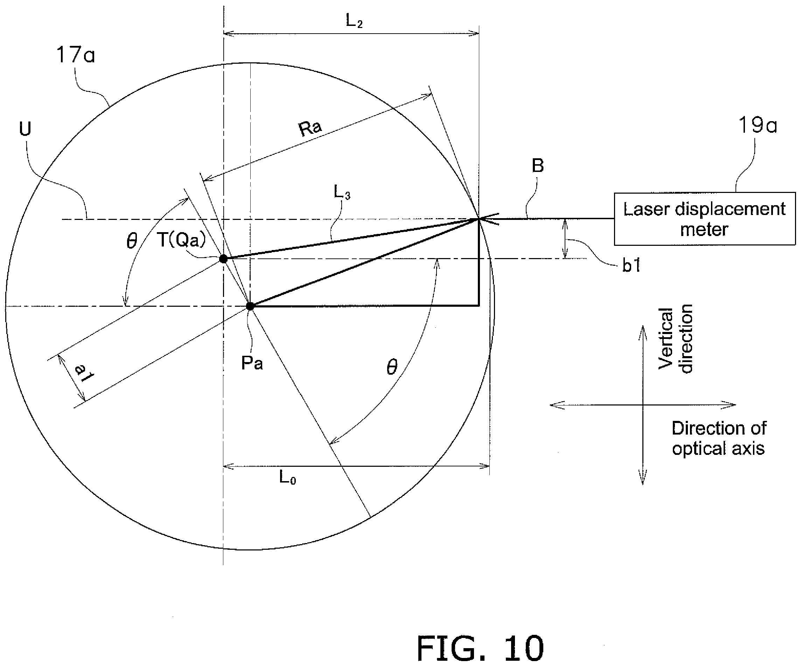

Here, as the laser displacement meter 19a moves along the rail 19b, it is extremely difficult to perfectly suppress swing of the laser displacement meter 19a within a plane vertical to the rotation axis T. Thus, in this embodiment, as described subsequently, the external form measuring apparatus 11 performs a process to calibrate displacement between the optical axis U of the laser displacement meter 19a (refer FIG. 10) and the rotation axis T. Accordingly, the effect exerted on measurement of the external form of the crankshaft blank 1 by swing of the laser displacement meter 19a can be suppressed, enabling the external form of the crankshaft blank 1 to be measured accurately.

Operation of the center hole drilling machine 10

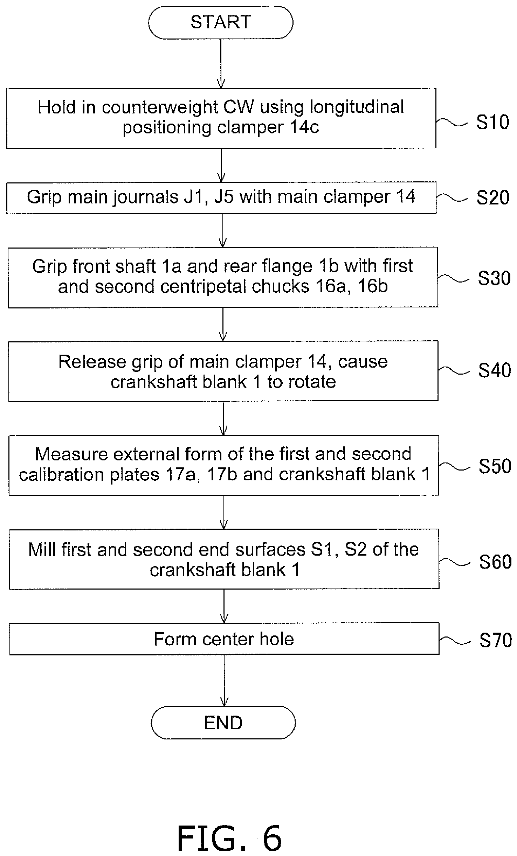

The operation of the center hole drilling machine 10 will now be described with reference to FIG. 6. FIG. 6 is a block diagram explaining the operation of the center hole drilling machine 10.

At step S10, the center hole drilling machine 10 arranges the crankshaft blank 1 in the center position of the main clamper 14, and, to perform positioning of the crankshaft blank 1 in the longitudinal direction, holds a center weight CW in from the outer side, using the longitudinal positioning clamper 14c.

At step S20, the center hole drilling machine 10 grips the main journals J1 and J5 of the crankshaft blank 1 using the first and second gripping portions 14a and 14b of the main clamper 14. In this way the crankshaft blank 1 is strongly secured by the main clamper 14.

At step S30 the center hole drilling machine 10 moves the first and second side portions 13a and 13b so as to approach the crankshaft blank 1, and grips the front shaft 1a and the rear flange 1b of the crankshaft blank 1 with the first and second centripetal chucks 16a and 16b. At this time, the crankshaft blank 1 gripped by the first and second centripetal chucks 16a and 16b maintains the posture of being gripped by the main clamper 14.

At step S40, the center hole drilling machine 10, after releasing the grip of the main journals J1 and J5 by the first and second gripping portions 14a and 14b, causes the first and second centripetal chucks 16a and 16b to rotate, thereby causing the crankshaft blank 1 to rotate.

At step S50, the external form measuring apparatus 11 of the center hole drilling machine 10, while scanning with the laser displacement meter 19a along the rail 19b in the direction of the Z axis, measures the external form of the first and second calibration plates 17a and 17b and the crankshaft blank 1 (basically, the counterweights CW). Note that the operations of the external form measuring apparatus 11 at step S50 are described subsequently.

At step S60, the center hole drilling machine 10, after gripping the crankshaft blank 1 with the first and second gripping portions 14a and 14b, releases the grip of the first and second centripetal chucks 16a and 16b, and, using the first and second working blade tools 15a and 15b, applies milling processing to the first and second end surfaces S1 and S2.

At step S70, the center hole drilling machine 10 forms a center hole, using the first and second working blade tools 15a and 15b, in the positions as determined based on the external forms measured at step S50.

Thereafter, the center hole drilling machine 10 causes the first and second working blade tools 15a and 15b to withdraw and releases the grip by the first and second gripping portions 14a and 14b, completing the process.

Operations of the external form measuring apparatus 11

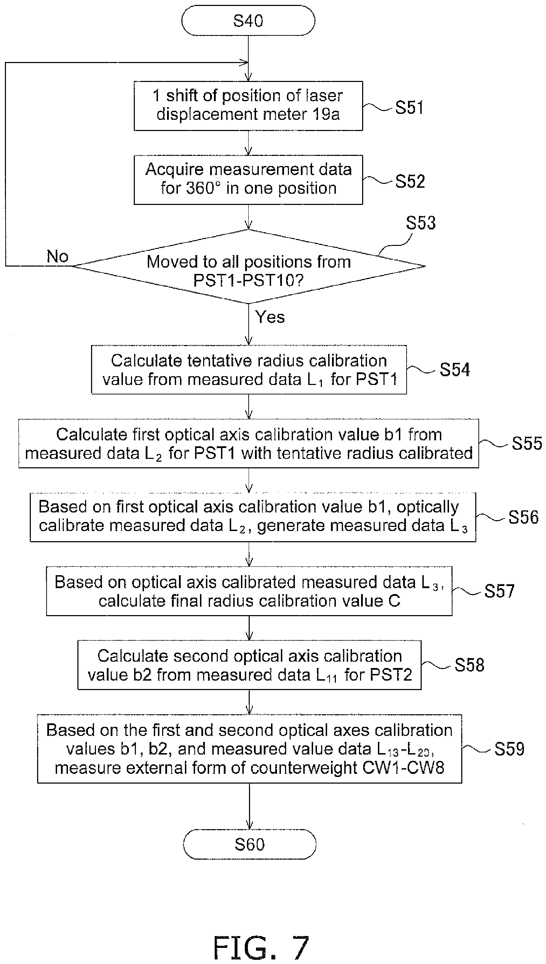

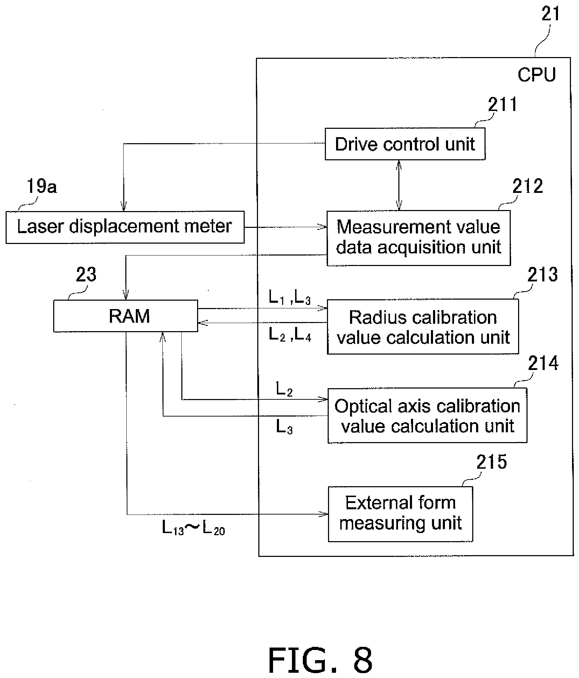

The operations of the external form measuring apparatus 11 will now be described with reference to FIG. 7 and FIG. 8. FIG. 7 is a block diagram explaining the operation of the external form measuring apparatus 11, showing in detail the content of step S50 in FIG. 6. FIG. 8 is a block diagram showing the configuration in the CPU 21 in order to measure external form.

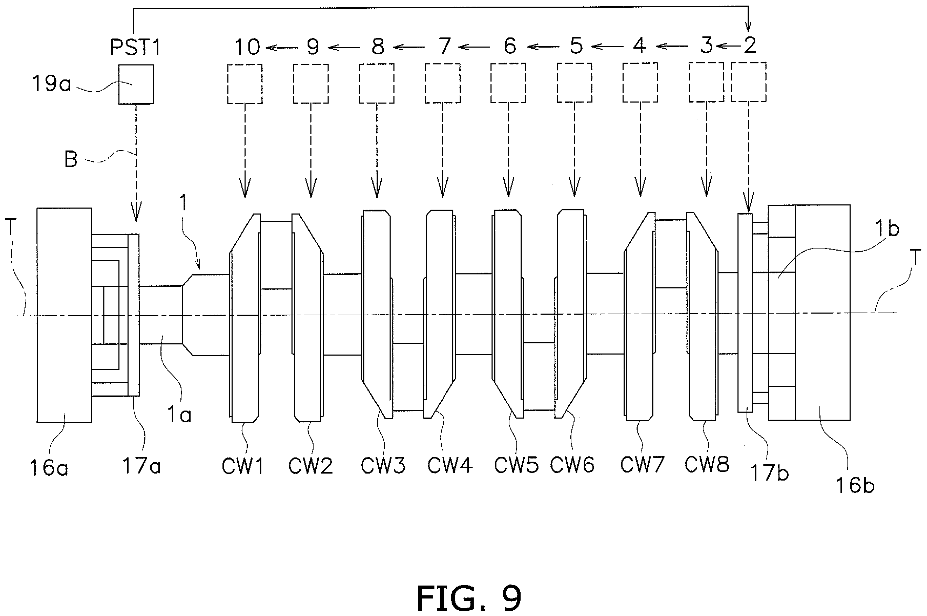

Firstly, at step S51, a drive control unit 211 sequentially shifts the position of the laser displacement meter 19a arranged to the side of the crankshaft blank 1. Here, FIG. 9 is a schematic diagram explaining the movement sequence of the laser displacement meter 19a. The drive control unit 211, each time the process returns from step S53 described subsequently, causes the laser displacement meter 19a to sequentially shift from PST1 to PST10, as shown in FIG. 9. In this way, the laser displacement meter 19a, after sequentially stopping at the side of the first calibration plate 17a and the second calibration plate 17b, sequentially stops at the side of the counterweights CW8-CW1.

Next, at step S52, a measurement value data acquisition unit 212, at each sequential stop between PST1 and PST10, acquires the measured value data while the crankshaft blank 1 rotates 360° about the rotation axis T. The measurement value data acquisition unit 212, each time 360° of measured value data is acquired, stores the 360° of measured value data in the RAM 23, and notifies the fact to the drive control unit 211.

At step S53, the drive control unit 211, determines whether or not the laser displacement meter 19a has been moved to all of the positions from PST1 through PST10, based on such notification from the measurement value data acquisition unit 212. If the laser displacement meter 19a has not been moved to all of these positions, the process of step S51 is returned to. If the laser displacement meter 19a has been moved to all of those positions, the system proceeds to the processes of step S54.

Then, at step S54, a radius calibration value calculation unit 213, calculates, based on the measured value data $L_1$ of PST1 (refer FIG. 9), a tentative radius calibration value for calibrating the measured value data of the laser displacement meter 19a 0 points. Basically, the radius calibration value calculation unit 213 acquires from the measured value data $L_1$ of 360° for PST1, a tentative center Pa' for the first calibration plate 17a, using the least squares method. Next, the radius calibration value calculation unit 213 calculates, with the tentative center Pa' as reference, a tentative radius Ra' for the first calibration plate 17a. Then, the radius calibration value calculation unit 213 calculates, as a tentative radius caelibration value, the difference between the tentative radius Ra' as calculated and the actual radius Ra. Further, the radius calibration value calculation unit 213, by applying tentative radius calibration, using the tentative radius calibration value, to the measured value data $L_1$ for PST1, generates measured value data $L_2$ for PST1, to which tentative radius calibration has been applied, and stores this in the RAM 23, before notifying the fact to an optical axis calibration value calculation unit 214.

Next, at step S55, the optical axis calibration value calculation unit 214 calculates, based on the measured value data $L_2$ of PST1 applied as the tentative radius calibration, a first optical axis calibration value b1 for the rotation axis T and the optical axis U in the vertical direction to the optical axis U of the laser displacement meter 19a.

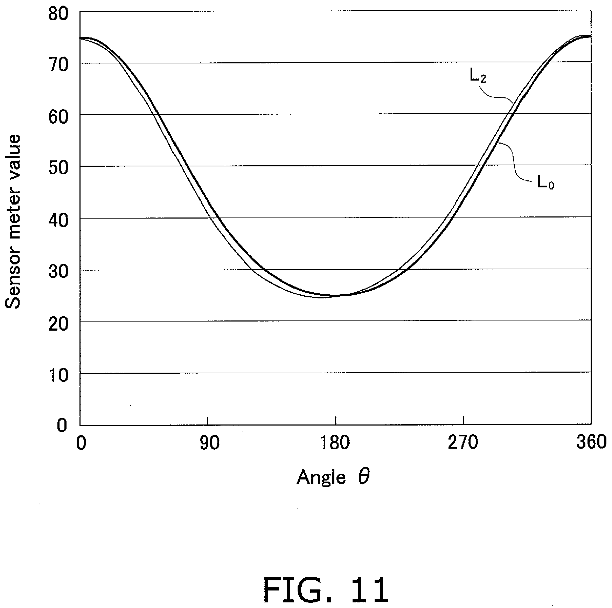

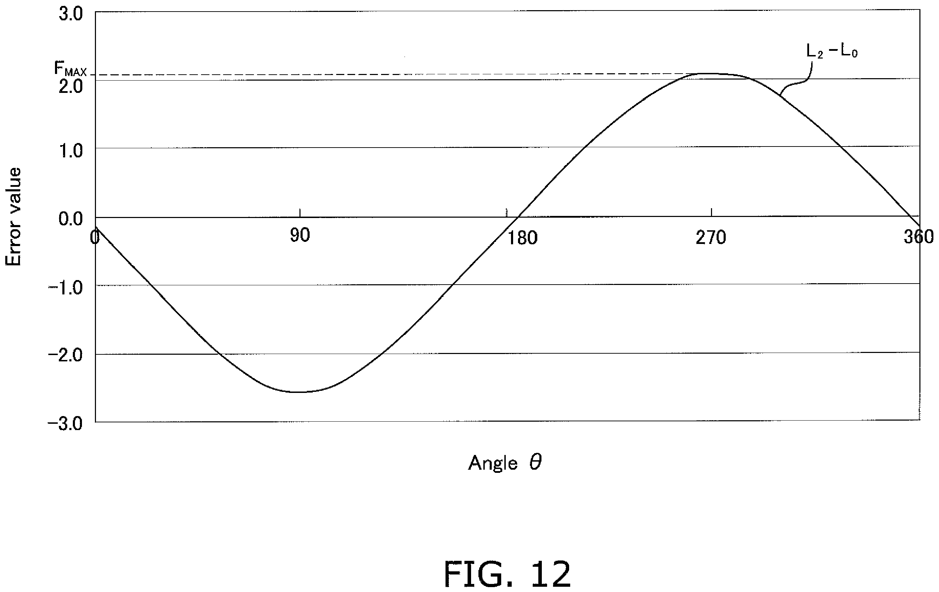

The method for calculating the first optical axis calibration value b1 will now be described with reference to the drawings. FIG. 10 is a schematic diagram explaining the state of displacement of the optical axis U of the laser displacement meter 19a, from the rotation axis T. FIG. 11 is a graph showing the transition of measured value data $L_2$ obtained by the laser displacement meter 19a shown in FIG. 10, and the transition of design value data $L_0$ corresponding to the phase of measured value data $L_2$. FIG. 12 is a graph showing the transition of error value ($L_2-L_0$) of measured value data $L_2$ and design value data $L_0$.

The design value data $L_0$, shown in the following formula (A), is a value acquired from the laser displacement meter 19a when the optical axis U is not displaced from the rotation axis T.

$$L_0 = a1\cos\theta - \sqrt{R^2 - (a1\sin\theta)^2}\cdots\cdots\ (A)$$

That is to say, as shown in FIG. 11, measured value data $L_0$ forms a wave shape in the combination of a sine wave and cosine wave.

Firstly, if we take the error value $(L_2-L_0)$ for measured value data $L_2$ and design value data $L_0$ as the function $F(\theta, b1)$, shown from the angle $\theta$ about the rotation axis taking a predetermined phase as reference and the first optical axis calibration value b1, the following formula (1) is satisfied.

$$L_2 - L_0 = F(\theta, b1)$$

$$L_2 - L_0 = \sqrt{Ra^2 - (a1\sin\theta + b1)^2} - \sqrt{Ra^2 - (a1\sin\theta)^2}$$

$$\sqrt{Ra^2 - (a1\sin\theta + b1)^2} = F(\theta, b1) + \sqrt{Ra^2 - (a1\sin\theta)^2}$$

$$Ra^2 - (a1\sin\theta + b1)^2 = \left( F(\theta, b1) + \sqrt{Ra^2 - (a1\sin\theta)^2} \right)^2$$

$$(a1\times\sin\theta + b1)^2 = Ra^2 - \left( F(\theta, b1) + \sqrt{Ra^2 - (a1\sin\theta)^2} \right)^2$$

$$a1\times\sin\theta + b1 = \pm\sqrt{Ra^2 - \left( F(\theta, b1) + \sqrt{Ra^2 - (a1\sin\theta)^2} \right)^2}\ \cdots\ (1)$$

Further, as shown in FIG. 10, if the first optical axis calibration value b1 is greater than 0, as shown in FIG. 12, when $\theta$ is in the region of 270°, the error value $(L_2-L_0)$ is maximum value $F_{MAX}$. Further, although not shown in the drawing, if the first optical axis calibration value b1 is less than 0, when $\theta$ is in the 90° region, the error value $(L_2-L_0)$ is maximum value $F_{MAX}$. Accordingly, based on the phase when the error value $(L_2-L_0)$ becomes maximum value $F_{MAX}$, it is possible to make a determination of whether the first optical axis calibration value b1 is greater than or less than 0.

Firstly, when the first optical axis calibration value b1 is greater than 0, $\theta$ is in the region of 270° and the error value $(L_2-L_0)$ becomes maximum value $F_{MAX}$, the left side of formula (1) is

$$a1\times\sin\theta + b1 = a1\times\sin270° + b1 = a1\times(-1) + b1 = -a1 + b1$$

Here, $|a1| > |b1|$, and as a1>0, -a1+b1<0 is satisfied. Thus, the following, formula (2) is satisfied.

$$a1\times\sin\theta + b1 = -a1 + b1 = -\sqrt{Ra^2 - \left( F\max + \sqrt{Ra^2 - (a1\times(-1))^2} \right)^2}$$

$$b1 = a1 - \sqrt{Ra^2 - \left( F\max + \sqrt{Ra^2 - a1^2} \right)^2}\ \cdots\cdots(2)$$

On the one hand, when the first optical axis calibration value b1 is less than 0, with $\theta$ in the 90° region, when the error value $(L_2-L_0)$ is the maximum value $F_{MAX}$, the left-hand side of formula (1) becomes

$$a1\times\sin\theta + b1 = a1\times\sin90° + b1 = a1 + b1$$

Here, $|a1| > |b1|$, and as a1>0, a1+b1>0 is satisfied. Thus, the following formula (3) is satisfied.

$$a1 \times \sin\theta + b1 = a1 + b1 = \sqrt{Ra^2 - \left(F\max + \sqrt{Ra^2 - \left(a1 \times 1\right)^2}\right)^2}$$

$$b1 = -a1 + \sqrt{Ra^2 - \left(F\max + \sqrt{Ra^2 - a1^2}\right)^2} \quad \cdots\cdots (3)$$

A summary of the above formula (2) and formula (3), gives

$$b1 = \pm\left|a1 - \sqrt{Ra^2 - \left(F\max + \sqrt{Ra^2 - a1^2}\right)^2}\right| \quad \cdots\cdots (4)$$

In this way, when the error value $F_{MAX}$ is in the region $\theta$=90, the first optical axis calibration value b1 (in other words, the displacement of the optical axis) is less than 0. On the other hand, when the error value $F_{MAX}$ is in the region $\theta$=270°, displacement of the optical axis becomes greater than 0.

The optical axis calibration value calculation unit 214, upon determining, from the transition of the error value $(L_2\text{-}L_0)$ shown in FIG. 12, whether or not the first optical axis calibration value b1 is greater than 0, can calculate the first optical axis calibration value b1 from formula (4). The optical axis calibration value calculation unit 214 then notifies the first optical axis calibration value b1 as calculated, to an external form calculation unit 215.

Next, at step S56, the optical axis calibration value calculation unit 214, through optical axis calibration of the measured value data $L_2$ based on the first optical axis calibration value b1 as calculated from formula (4), generates measured value data $L_3$ of PST1 applied for optical calibration. Basically, the measured value data $L_3$, as shown in FIG. 10, is the square root of $b1^2 + L_2^2$. The optical axis calibration value calculation unit 214 stores the measured value data $L_3$ in the RAM 23.

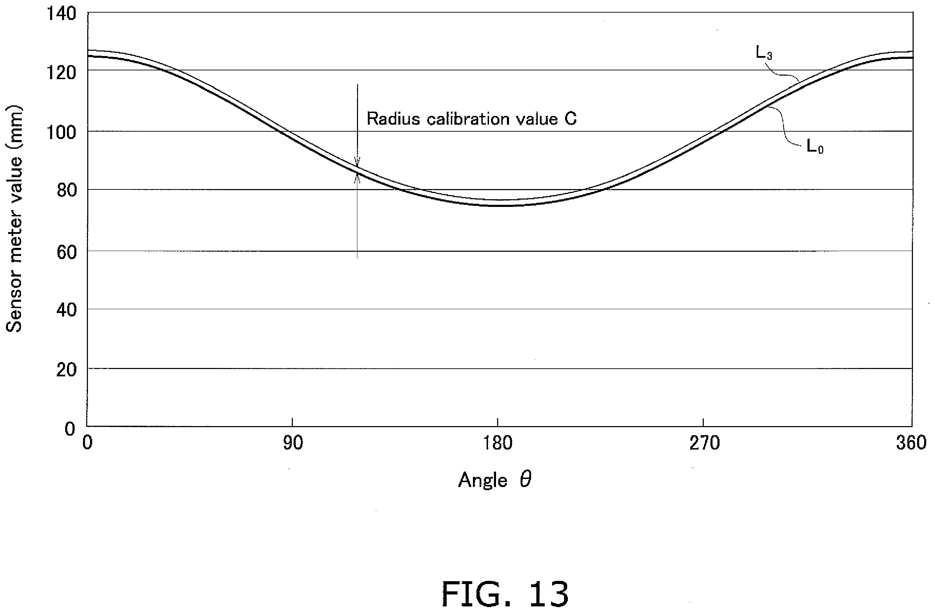

Then, at step S57, the radius calibration value calculation unit 213, based on the measured value data $L_3$ for PST1 applied for optical calibration, calculates a final radius calibration value c for calibrating measured value data of the laser displacement meter 19a 0 points. Basically, the radius calibration value calculation unit 213 calculates the error value $(L_3\text{-}L_0)$ of design value data $L_0$ and measured value data $L_3$ for each angle, and by averaging the error value $(L_3\text{-}L_0)$ for all angles, calculates the final radius calibration value c. Here, FIG. 13 is a graph showing the transition of measured value data $L_3$ and design value data $L_0$. As shown in FIG. 13, the final radius calibration value c can be calculated from the error value $(L_3\text{-}L_0)$ between the measured value data $L_3$ and design value data $L_0$. The radius calibration value calculation unit 213, by subtracting the final radius calibration value c from the measured value data $L_3$, generates the final measured value data $L_4$, stores this in the RAM 23 and notifies the fact to the external form calculation unit 215.

At step S58, the radius calibration value calculation unit 213 and the optical axis calibration value calculation unit 214 calculate optical axis calibration value b for the second calibration plate 17b. Basically, the radius calibration value calculation unit 213 and the optical axis calibration value calculation unit 214, by implementing the same processes as implemented at steps S54 and S55 above, based on the measured value data $L_{11}$ for PST2 (refer FIG. 9) and the design value data $L_{01}$ for the second calibration plate 17b, calculate measured value data $L_{12}$ for PST2 applied for tentative radius calibration, and the second optical axis calibration value b2. The optical axis calibration value calculation unit 214 notifies the second optical axis calibration value b2 as calculated to the external form calculation unit 215.

Next, at step S59, the external form calculation unit 215, based on the measured value data $L_{13}\text{-}L_{20}$ for PST3-PST10 (refer FIG. 9), the first optical axis calibration value b1 and the second optical axis calibration value b2, calculates the external form of the eight counterweights CW1-CW8.

Basically, the external form calculation unit 215, based on the relative positions of each of PST3-PST10 in relation to PST1 and PST2, calculates third through tenth optical axis calibration values b3-b10 corresponding to PST3-PST10, by proportionately dividing the first optical axis calibration value b1 and the second optical axis calibration value b2. For example, taking the interval between PST3 and PST2 is "1", when the individual between PST3 and PST1 is "15", the third optical axis calibration value b3 is the sum of the first optical axis calibration value b1 $\times$ 1/16 and the second optical axis calibration value b2 $\times$ 15/16.

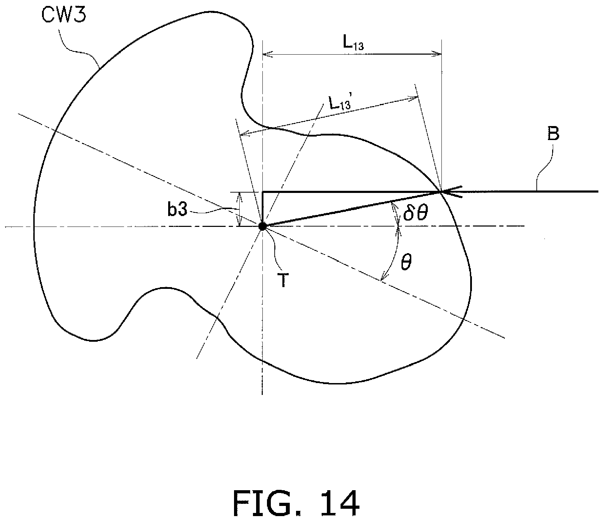

Using the third through tenth optical axis calibration values b3-b10 calculated in this way, the external form calculation unit 215 performs optical axis calibration for the measured value data $L_{13}\text{-}L_{20}$. Basically, the external form calculation unit 215, in the case of counterweight CW3 for example, as shown in FIG. 14, calculates calibration measured value data $L_{13}'$ based on the third optical axis calibration value b3 and the measured value data $L_{13}$ corresponding to an angle $\theta$. Then the external form calculation unit 215, based on the calibration measured value data $L_{13}'$, calculates angle calibration value $\delta\theta$. The calibration measured value data $L_{13}'$ is calculated using the following formula (5), and the angle calibration value $\delta\theta$, is calculated using the following formula (6).

$$L_{13}' = \sqrt{L_{13}^2 + b3^2} \qquad \cdots\cdot(5)$$

$$\delta\theta = \sin^{-1}\left(\frac{b3}{L_{13}'}\right) \qquad \cdots\cdot(6)$$

Thereafter, the process proceeds to the above-described step S60 (refer FIG. 7).

Preferred Configuration for the Calibration Plates

A preferred configuration for the first and second calibration plates 17a and 17b will now be investigated using a simulation.

Because measurement errors of the laser displacement meter 19a itself are included in the measured value data of the laser displacement meter 19a related to this embodiment, concern arises that if the error value ($L_2$-$L_0$) is small, the error value ($L_2$-$L_0$) may be buried in the measurement errors of the laser displacement meter 19a itself.

On the one hand, to the extent that the interval a1 between the center of the first calibration plate 17a and the center Qa of the first insertion hole 171 is large, or, to the extent that the radius Ra of the first calibration plate 17a is small, the error value ($L_2$-$L_0$) can be shown up. An especially preferable relationship between the interval a1 and the radius Ra will now be verified.

Firstly, as described above, when the first optical axis calibration value b1 is greater than 0, if the angle $\theta$ is in the region of 270°, the error value ($L_2$-$L_0$) becomes the maximum value $F_{MAX}$. Thus, between the maximum value $F_{MAX}$ and the function F (270°, b1) the following formula (7) is satisfied.

$$\begin{aligned}
F_{MAX} &= F(270°, b1) \\
&= \sqrt{Ra^2 - (a1 \times \sin 270° + b1)^2} - \sqrt{Ra^2 - (a1 \times \sin 270°)^2} \\
&= \sqrt{Ra^2 - (a1 \times (-1) + b1)^2} - \sqrt{Ra^2 - (a1 \times (-1))^2} \\
&= \sqrt{Ra^2 - (b1 - a1)^2} - \sqrt{Ra^2 - a1^2} \cdots\cdot(7)
\end{aligned}$$

Here, FIG. 15, is a graph showing the relationship between $F_{MAX}$ and optical axis displacement for cases representing various intervals a1 and radii Ra in formula (7). As shown in FIG. 15, when the combinations of (Ra, a1) are (50, 25) (50, 20) (75, 25) (50, 15) (75, 20) and (100, 25), a satisfactory $F_{MAX}$ of not less than 2.0 was obtained. From this, it is determined that it is preferable that the interval a1 between center Qa and center Pa be not less than ¼ of the radius Ra of the first calibration plate 17a.

The same applies with respect to the second calibration plate 17b, for which it is preferable that the interval a2 between the center Qb and the center Pb be not less than ¼ of the radius of Rb of the second calibration plate 17b.

Operation and Effects

(1) In the external form measuring apparatus 11, the optical axis calibration value calculation unit 214 calculates the first optical axis calibration value b1 based on the measured value data $L_1$ of the first calibration plate 17a and the design value data $L_0$ of the first calibration plate 17a. In the same manner, the optical axis calibration value calculation unit 214 calculates the second optical axis calibration value b2 based on the measured value data $L_{11}$ of the second calibration plate 17b and the design value data $L_{01}$ of the second calibration plate 17b. The external form calculation unit 215, by calibrating the measured value data $L_{13}$-$L_{20}$ of the crankshaft blank 1 based on the first and second optical axes calibration values b1 and b2, measures the external form of the crankshaft blank 1. In this way, the external form measuring apparatus 11 is able to calibrate measured value data of the laser displacement meter 19a in conformance with the interval in the vertical direction between the rotation axis T and the optical axis U of the laser displacement meter 19a. For this reason, even when there is displacement between the optical axis U and the rotation axis T, the external form of the crankshaft blank 1 can be accurately measured.

(2) The interval a1 between the center Qa of the first insertion hole 171 and the center Pa of the first calibration plate 17a is not less than ¼ of the radius Ra of the first calibration plate 17a.

Accordingly, as can be determined from the simulation results shown in FIG. 15, the error value ($L_2$-$L_0$) of the measured value data $L_2$ and the design value data $L_0$ can be shown up. For this reason, concealment of error value data ($L_2$-$L_0$) in measurement errors of the laser displacement meter 19a itself can be controlled.

Other Embodiments

(a) The foregoing preferred embodiment has been described with respect to the case in which the external form measuring apparatus 11 related to the present invention is internally housed in the center hole drilling machine 10 for the crankshaft blank 1, however the invention is not restricted to this configuration. It is also suitable for the external form measuring apparatus 11 to be housed in for example, a processing machine for processing another object to be measured such as a camshaft or the like. Further, it is also possible for the external form measuring apparatus 11 to be used independently.

(b) In the above-described preferred embodiment, the external form measuring apparatus 11 is provided with the laser displacement meter 19a, however the invention is not restricted to this configuration. It is suitable for the external form measuring apparatus 11 to have a noncontact displacement meter having a single optical axis, instead of the laser displacement meter 19a. This kind of displacement meter could be for example, an infrared displacement meter or an LED type displacement meter or the like.

(c) In the above-described preferred embodiment, the respective configurations of the first and second calibration plates 17a and 17b are different, however the invention is not restricted to this configuration. It is also suitable, in conformance to the external form of both end portions of the object to be measured, for the respective configurations of the first and second calibration plates 17a and 17b to be the same.

(d) In the above-described preferred embodiment, the laser displacement meter 19a moved in order from PST1 to PST10 as shown in FIG. 9, however the invention is not restricted to this order. It is possible for the operation of the laser displacement meter 19a to be set as appropriate.

(e) In the above-described preferred embodiment, as an example of the object to be measured by the external form measuring apparatus 11, the description was provided of counterweights CW of the crankshaft blank 1, however the external form of the object to be measured is not restricted to this example. It is also suitable for the external form of the object to be measured to be circular or noncircular.

(f) In the above-described preferred embodiment, the external form calculation unit 215 by proportionately dividing the first optical axis calibration value b1 and the second optical axis calibration value b2, calculates the third through tenth optical axes values b3-b10 in coordination to PST3-PST10, however the present invention is not restricted in this way.

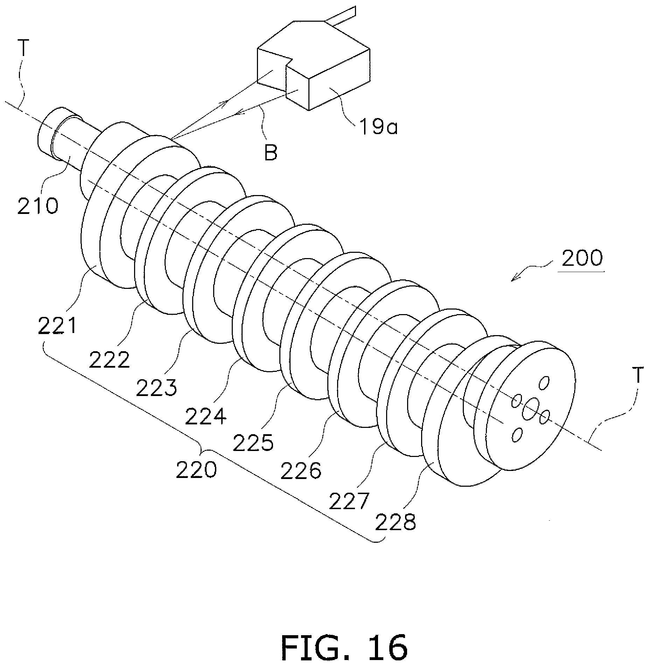

For example, it is also suitable for the external form measuring apparatus 11 to be provided with a calibration test bar 200 as shown in FIG. 16, and, prior to measuring the external form of the object to be measured, to use the calibration test bar 200 in advance to acquire additionally, an optical axis calibration value in-between the first and second calibration plates 17a and 17b.

As shown in FIG. 16, the calibration test bar 200 has a rod member 210 and eight intermediate calibration plates 220 fixed to the rod member 210. The respective ends of the rod member 210 are inserted in the first and second insertion holes 171 and 172. The eight intermediate calibration plates 220 are formed in plate shape and eccentric in relation to the rotation axis T. The rod member 210, in the condition of being supported at each end by the first and second centripetal chucks 16a and 60b, rotates about the rotation axis T. The eight intermediate calibration plates 220 include the first through eighth intermediate calibration plates 221-228. The first through eighth intermediate calibration plates 221-228 are secured in positions corresponding to the eight counterweights CW1-CW8. With this kind of the external form measuring apparatus 11, in the same manner as, with respect to the first calibration plate 17a, the first optical axis calibration value b1 is obtained, it is possible to calculate in advance optical axis calibration values (an example of the third optical axis calibration value) for, respectively, the first through eighth intermediate calibration plates 221-228. Accordingly, when measuring the external form of the crankshaft blank 1 the measured value data $L_{13}$-$L_{20}$ for the eight counterweights CW1-CW8 respectively, can be calibrated using the optical axis calibration values calculated for, respectively, the first through eighth intermediate calibration plates 221-228. In this case, in comparison to the case of using optical axis calibration values calculated by proportional division of the first optical axis calibration value b1 and the second optical axis calibration value b2, it is possible to achieve calibration that more closely realizes the actually existing displacement. For this reason, it is possible to more accurately measure the external form of an object to be measured.

(g) In the above-described preferred embodiment, the radius calibration value calculation unit 213 calculates the final radius calibration value c based on measured value data $L_3$ for PST1, however the present invention is not restricted to this arrangement. It is suitable for the radius calibration value calculation unit 213 to calculate a first radius calibration value c1 based on measured value data $L_3$ for PST1, and, based on measured value data $L_{11}$ for PST2, to calculate a second radius calibration value c2. In this case, the external form calculation unit 215 calculates third through tenth radius calibration values c3-c10 coordinated to PST3-PST10, based on the relative positions of PST3-PST10 respectively, to PST1 and PST2, by proportional division of the first radius calibration value c1 and the second radius calibration value c2. It is also suitable for the external form calculation unit 215, after offsetting each measured value data $L_{13}$-$L_{20}$ respectively using, each radius calibration value c3-c10, to use each optical axis calibration value b3-b10 to perform optical axis calibration for the radius calibrated, measured value data $L_{13}$-$L_{20}$. In this way, it is possible, through using proportional division values of the first and second radius calibration values c1 and c2, to improve the accuracy of radius calibration.

Note that in this case also, it is also suitable to directly obtain the third through tenth radius calibration values c3-c10 by using the calibration test bar 200 shown in FIG. 16. This enables further improvement in the accuracy of radius calibration.

Description of the Reference Numerals

| | |
|---|---|
| 100 | Crankshaft processing system |
| 1 | Crankshaft blank |
| CW | Counterweight |
| 10 | Center hole drilling machine |
| 11 | External form measuring apparatus |
| 20 | Computer |
| 21 | CPU |
| 211 | Drive control unit |
| 212 | Measurement value data acquisition unit |
| 213 | Radius calibration value calculation unit |
| 214 | Optical axis calibration value calculation unit |
| 215 | External form measurement unit |
| 16a, 16b | First and second centripetal chucks |
| 17a, 17b | First and second calibration plates |
| 19a | Laser displacement meter |
| 19b | Rail |

**Claims**

1. An external form measuring apparatus (11) for measuring an external form of an object comprising:

   a first chuck (16a) configured to rotatably grip a first end portion (1a) of the object to be measured (1);
   a second chuck (16b) configured to rotatably grip a second end portion (1b) of the object to be measured (1);
   a first calibration plate (17a) fixed to the first chuck (16a), the first calibration plate (17a) having a first insertion hole (171) to which the first end portion (1a) is inserted, the first calibration plate (17a) being formed in round plate shape;
   a second calibration plate (17b) fixed to the second chuck (16b), the second calibration plate (17b) having a second insertion hole (172) to which the second end portion (1b) is inserted, the second calibration plate (17b) being formed in round plate shape;
   a laser displacement meter (19a) arranged to a side of the object to be measured (1), the laser displacement meter (19a) configured to move along a rotation axis (T) of the first chuck (16a), the laser displacement meter (19a) configured to measure positions of the object to be measured (1), the first calibration plate (17a) and the second calibration plate (17b) rotating about the rotation axis (T);
   an optical axis calibration value calculation unit (214) configured to calculate first optical axis calibration value (b1) and second optical axis calibration value (b2) showing an interval between the rotation axis (T) and an optical axis (U) of the laser displacement meter (19a) defined by an irradiated laser beam (B), wherein the interval (b1) extends in a vertical direction to the optical axis (U), based on measured value data ($L_1$, $L_2$, $L_3$, $L_{01}$, $L_{11}$, $L_{13}$, $L_{20}$) of each of the first and second calibration plates (17a, 17b) and design value data (Lo) of each of the first and second calibration plates (17a, 17b) which are measured by the laser displacement meter (19a); and

an external form measuring unit (215) configured to measure an external form of the object to be measured (1) by calibrating the measured value data ($L_1$, $L_2$, $L_3$, $L_{01}$, $L_{11}$, $L_{13}$, $L_{20}$) of the object to be measured (1) by the laser displacement meter (19a) based on the first optical axis calibration value (b1) and the second optical axis calibration value (b2);

a center (Qa) of the first insertion hole (171) being away from a center (Pa) of the first calibration plate (17a), and a center of the second insertion hole (172) being away from a center of the second calibration plate (17b).

2. The external form measuring apparatus (11) according to claim 1, wherein

an interval between the center (Qa) of the first insertion hole (171) and the center (Pa) of the first calibration plate (17a) is not less than ¼ of a radius (Ra) of the first calibration plate (17a).

3. The external form measuring apparatus (11) according to either of claim 1 or claim 2, wherein

an interval between the center of the second insertion hole (172) and the center of the second calibration plate (17b) is not less than ¼ of a radius of the second calibration plate (17b).

4. The external form measuring apparatus (11) according to any one of claims 1 to 3 further comprising:

a rod member (210) and a intermediate calibration plate (221 - 228), both ends of the rod member (210) inserted in the first insertion hole (171) and the second insertion hole (172), the intermediate calibration plate (221 - 228) fixed to the rod member (210), the intermediate calibration plate (221 - 228) being eccentric from the rotation axis (T), the intermediate calibration plate (221 - 228) formed in round plate shape; wherein

the optical axis calibration value calculation unit (214) is configured to calculate third optical axis calibration value (b3) showing an interval between the optical axis (U) and the rotation axis (T) in the vertical direction to the optical axis (U), and

the external form measuring unit (215) is configured to measure the external form of the object to be measured (1) by calibrating the measured value data ($L_1$, $L_2$, $L_3$, $L_{01}$, $L_{11}$, $L_{13}$, $L_{20}$) of the object to be measured (1) based on the first optical axis calibration value (b1), the second optical axis calibration value (b2) and the third optical axis calibration value (b3).

**Patentansprüche**

1. Außenform-Messvorrichtung (11) zum Messen einer äußeren Form eines Objekts, umfassend:

eine erste Spannvorrichtung (16a), die eingerichtet ist, um einen ersten Endabschnitt (1a) des zu messenden Objekts (1) drehbar zu greifen;

eine zweite Spannvorrichtung (16b), die eingerichtet ist, um einen zweiten Endabschnitt (1b) des zu messenden Objekts (1) drehbar zu greifen;

eine erste Kalibrierplatte (17a), die an der ersten Spannvorrichtung (16a) befestigt ist, wobei die erste Kalibrierplatte (17a) ein erstes Einsetzloch (171) aufweist, in das der erste Endabschnitt (1a) eingesetzt wird, wobei die erste Kalibrierplatte (17a) in Form einer runden Platte ausgebildet ist;

eine zweite Kalibrierplatte (17b), die an der zweiten Spannvorrichtung (16b) befestigt ist, wobei die zweite Kalibrierplatte (17b) ein zweites Einsetzloch (172) aufweist, in das der zweite Endabschnitt (1b) eingesetzt wird, wobei die zweite Kalibrierplatte (17b) in Form einer runden Platte ausgebildet ist;

ein Laser-Verstellungsmessgerät (19a), das an einer Seite des zu messenden Objekts (1) angeordnet ist, wobei das Laser-Verstellungsmessgerät (19a) eingerichtet ist, um sich entlang einer Drehachse (T) der ersten Spannvorrichtung (16a) zu bewegen, wobei das Laser-Verstellungsmessgerät (19a) eingerichtet ist, um Positionen des zu messenden Objekts (1) zu messen, wobei die erste Kalibrierplatte (17a) und die zweite Kalibrierplatte (17b) um die Drehachse (T) rotieren;

eine Berechnungseinheit (214) für den Kalibrierungswert der optischen Achse, die eingerichtet ist, um einen ersten Kalibrierungswert (b1) der optischen Achse und einen zweiten Kalibrierungswert (b2) der optischen Achse zu berechnen, die einen Abstand zwischen der Drehachse (T) und einer optischen Achse (U) des Laser-

12

Verstellungsmessgeräts (19a), welche durch einen ausgestrahlten Laserstrahl (B) definiert ist, anzeigen, wobei sich der Abstand (b1) in einer vertikalen Richtung zur optischen Achse (U) erstreckt, basierend auf Messwertdaten ($L_1$, $L_2$, $L_3$, $L_{01}$, $L_{11}$, $L_{13}$, $L_{20}$) von jeder der ersten und der zweiten Kalibrierplatten (17a, 17b) und Konstruktionswertdaten ($L_0$) von jeder der ersten und der zweiten Kalibrierplatten (17a, 17b), die mit dem Laser-Verstellungsmessgerät (19a) gemessen werden; und

eine Außenform-Messeinheit (215), die eingerichtet ist, um eine äußere Form des zu messenden Objekts (1) durch Kalibrieren der Messwertdaten ($L_1$, $L_2$, $L_3$, $L_{01}$, $L_{11}$, $L_{13}$, $L_{20}$) des zu messenden Objekts (1) durch das Laser-Verstellungsmessgerät (19a) basierend auf dem ersten Kalibrierungswert (b1) der optischen Achse und dem zweiten Kalibrierungswert (b2) der optischen Achse zu messen;

eine Mitte (Qa) des ersten Einsetzlochs (171), die von einer Mitte (Pa) der ersten Kalibrierplatte (17a) beabstandet ist, und

eine Mitte des zweiten Einsetzlochs (172), die von einer Mitte der zweiten Kalibrierplatte (17b) beabstandet ist.

2. Außenform-Messvorrichtung (11) nach Anspruch 1, wobei ein Abstand zwischen der Mitte (Qa) des ersten Einsetzlochs (171) und der Mitte (Pa) der ersten Kalibrierplatte (17a) nicht kleiner als 1/4 eines Radius (Ra) der ersten Kalibrierplatte (17a) ist.

3. Außenform-Messvorrichtung (11) nach Anspruch 1 oder Anspruch 2, wobei ein Abstand zwischen der Mitte des zweiten Einsetzlochs (172) und der Mitte der zweiten Kalibrierplatte (17b) nicht kleiner als 1/4 eines Radius der zweiten Kalibrierplatte (17b) ist.

4. Die Außenform-Messvorrichtung (11) nach einem der Ansprüche 1 bis 3, des Weiteren umfassend:

ein Stabelement (210) und eine Zwischenkalibrierplatte (221 - 228), wobei beide Enden des Stabelements (210) in das erste Einsetzloch (171) und das zweite Einsetzloch (172) eingesetzt werden, die Zwischenkalibrierplatte (221 - 228) am Stabelement (210) befestigt ist, die Zwischenkalibrierplatte (221 - 228) exzentrisch zu der Drehachse (T) ist und die Zwischenkalibrierplatte (221 - 228) in Form einer runden Platte ausgebildet ist; wobei die Berechnungseinheit (214) für den Kalibrierungswert der optischen Achse eingerichtet ist, um einen dritten Kalibrierungswert (b3) der optischen Achse zu berechnen, der einen Abstand zwischen der optischen Achse (U) und der Drehachse (T) in der vertikalen Richtung zur optischen Achse (U) anzeigt, und

die Außenform-Messeinheit (215) eingerichtet ist, um die Außenform des zu messenden Objekts (1) durch Kalibrieren der Messwertdaten ($L_1$, $L_2$, $L_3$, $L_{01}$, $L_{11}$, $L_{13}$, $L_{20}$) des zu messenden Objekts (1) basierend auf dem ersten Kalibrierungswert (b1) der optischen Achse, dem zweiten Kalibrierungswert (b2) der optischen Achse und dem dritten Kalibrierungswert (b3) der optischen Achse zu messen.

## Revendications

1. Appareil de mesure de forme externe (11) pour mesurer une forme externe d'un objet, comprenant :

un premier mandrin (16a) configuré pour agripper avec faculté de rotation une première portion terminale (1a) de l'objet à mesurer (1) ;

un second mandrin (16b) configuré pour agripper avec faculté de rotation une seconde portion terminale (1b) de l'objet à mesurer (1) ;

une première plaque de calibrage (17a) fixée sur le premier mandrin (16a), la première plaque de calibrage (17a) ayant un premier trou d'insertion (171) dans lequel la première portion terminale (1a) est insérée, la première plaque de calibrage (17a) étant formée sous la forme d'une plaque ronde ;

une seconde plaque de calibrage (17b) fixée sur le second mandrin (16b), la seconde plaque de calibrage (17b) ayant un second trou d'insertion (172) dans lequel la seconde portion terminale (1b) est insérée, la seconde plaque de calibrage (17b) étant formée sous la forme d'une plaque ronde ;

un dispositif de mesure de déplacement à laser (19a) agencé sur un côté de l'objet à mesurer (1), le dispositif de mesure de déplacement à laser (19a) étant configuré pour se déplacer le long d'un axe de rotation (T) du premier mandrin (16a), le dispositif de mesure de déplacement à laser (19a) étant configuré pour mesurer des positions de l'objet à mesurer (1), la première plaque de calibrage (17a) et la seconde plaque de calibrage (17b) étant en rotation autour de l'axe de rotation (T) ;

une unité de calcul de valeur de calibrage d'axe optique (214) configurée pour calculer une première valeur de calibrage d'axe optique (b1) et une seconde valeur de calibrage d'axe optique (b2) présente un intervalle entre l'axe de rotation (T) et un axe optique (U) du dispositif de mesure de déplacement à laser (19a) défini par un faisceau laser irradié (B), dans lequel l'intervalle (b1) s'étend dans une direction verticale vers l'axe optique (U), sur la base de données de valeurs mesurées ($L_1$, $L_2$, $L_3$, $L_{01}$, $L_{11}$, $L_{13}$, $L_{20}$) de chacune de la première et de la seconde plaque de calibrage (17a, 17b), et sur des données de valeurs de conception ($L_0$) de chacune de la première et de la seconde plaque de calibrage (17a, 17b) qui sont mesurées par le dispositif de mesure de déplacement à laser (19a) ; et

une unité de mesure de forme externe (215) configurée pour mesurer une forme externe de l'objet à mesurer (1) en calibrant les données de valeurs mesurées ($L_1$, $L_2$, $L_3$, $L_{01}$, $L_{11}$, $L_{13}$, $L_{20}$) de l'objet à mesurer (1) par le dispositif de mesure de déplacement à laser (19a) sur la base de la première valeur de calibrage d'axe optique (b) et de la seconde valeur de calibrage d'axe optique (b2) ;

un centre (Qa) du premier trou d'insertion (171) est éloigné d'un centre (Pa) de la première plaque de calibrage (17a), et

un centre du second trou d'insertion (172) est éloigné d'un centre de la seconde plaque de calibrage (17b).

2. Appareil de mesure de forme externe (11) selon la revendication 1, dans lequel
un intervalle entre le centre (Qa) du premier trou d'insertion (171) et le centre (Pa) de la première plaque de calibrage (17a) n'est pas plus petit que ¼ d'un rayon (Ra) de la première plaque de calibrage (17a).

3. Appareil de mesure de forme externe (11) selon l'une ou l'autre des revendications 1 ou 2, dans lequel
un intervalle entre le centre du second trou d'insertion (172) et le centre de la seconde plaque de calibrage (17b) n'est pas plus petit que ¼ d'un rayon de la seconde plaque de calibrage (17b).

4. Appareil de mesure de forme externe (11) selon l'une quelconque des revendications 1 à 3, comprenant en outre :

un élément en forme de barreau (210) et une plaque de calibrage intermédiaire (221-228), les deux extrémités de l'élément en forme de barreau (210) étant insérées dans le premier trou d'insertion (171) et le second trou d'insertion (172), la plaque de calibrage intermédiaire (221-228) étant fixée à l'élément en forme de barreau (210), la plaque de calibrage intermédiaire (221-228) étant excentrée par rapport à l'axe de rotation (T), la plaque de calibrage intermédiaire (221-228) étant formée sous la forme d'une plaque ronde ; dans lequel
l'unité de calcul de valeur de calibrage d'axe optique (214) est configurée pour calculer une troisième valeur de calibrage d'axe optique (b3) présentant un intervalle entre l'axe optique (U) et l'axe de rotation (T) dans la direction verticale vers l'axe optique (U), et
l'unité de mesure de forme externe (215) est configurée pour mesurer la forme externe de l'objet à mesurer (1) en calibrant les données de valeurs mesurées ($L_1$, $L_2$, $L_3$, $L_{01}$, $L_{11}$, $L_{13}$, $L_{20}$) de l'objet à mesurer (1) sur la base de la première valeur de calibrage d'axe optique (b1), de la seconde valeur de calibrage d'axe optique (b2) et de la troisième valeur de calibrage d'axe optique (b3).

Crankshaft blank 1

100

Center hole drilling machine　～10

External form measuring apparatus ～11

Measurement result

Centerline information

Computer ～20

CPU ～21

ROM ～22

RAM ～23

Crankshaft blank 1
(After center hole
processing complete)

FIG. 1

FIG. 2

EP 2 713 139 B1

# FIG. 3

# FIG. 4

# FIG. 5

```
                    ┌─────────────┐
                    │    START    │
                    └─────────────┘
                           │
                           ▼
   ┌──────────────────────────────────────────┐
   │  Hold in counterweight CW using longitudinal  │  ╲  S10
   │       positioning clamper 14c              │
   └──────────────────────────────────────────┘
                           │
                           ▼
   ┌──────────────────────────────────────────┐
   │  Grip main journals J1, J5 with main clamper 14  │  ╲  S20
   └──────────────────────────────────────────┘
                           │
                           ▼
   ┌──────────────────────────────────────────┐
   │  Grip front shaft 1a and rear flange 1b with first  │  ╲  S30
   │     and second centripetal chucks 16a, 16b     │
   └──────────────────────────────────────────┘
                           │
                           ▼
   ┌──────────────────────────────────────────┐
   │   Release grip of main clamper 14, cause    │  ╲  S40
   │        crankshaft blank 1 to rotate         │
   └──────────────────────────────────────────┘
                           │
                           ▼
   ┌──────────────────────────────────────────┐
   │  Measure external form of the first and second  │  ╲  S50
   │ calibration plates 17a, 17b and crankshaft blank 1 │
   └──────────────────────────────────────────┘
                           │
                           ▼
   ┌──────────────────────────────────────────┐
   │   Mill first and second end surfaces S1, S2 of the  │  ╲  S60
   │            crankshaft blank 1               │
   └──────────────────────────────────────────┘
                           │
                           ▼
   ┌──────────────────────────────────────────┐
   │            Form center hole                 │  ╲  S70
   └──────────────────────────────────────────┘
                           │
                           ▼
                    ┌─────────────┐
                    │     END     │
                    └─────────────┘
```

# FIG. 6

S40

1 shift of position of laser displacement meter 19a — S51

Acquire measurement data for 360° in one position — S52

S53

No — Moved to all positions from PST1-PST10?

Yes

Calculate tentative radius calibration value from measured data $L_1$ for PST1 — S54

Calculate first optical axis calibration value b1 from measured data $L_2$ for PST1 with tentative radius calibrated — S55

Based on first optical axis calibration value b1, optically calibrate measured data $L_2$, generate measured data $L_3$ — S56

Based on optical axis calibrated measured data $L_3$, calculate final radius calibration value C — S57

Calculate second optical axis calibration value b2 from measured data $L_{11}$ for PST2 — S58

Based on the first and second optical axes calibration values b1, b2, and measured value data $L_{13}$-$L_{20}$, measure external form of counterweight CW1-CW8 — S59

S60

FIG. 7

FIG. 8

FIG. 9

EP 2 713 139 B1

FIG. 10

FIG. 11

FIG. 12

**FIG. 13**

EP 2 713 139 B1

FIG. 14

Relationship between optical axis
displacement and maximum error value

FIG. 15

EP 2 713 139 B1

FIG. 16

**EP 2 713 139 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010029994 A
- EP 2308622 A1
- WO 9323820 A1